# EUROPEAN PATENT SPECIFICATION

(11) **EP 3 616 856 B1**
(45) Date of publication and mention of the grant of the patent: **05.07.2023**
(21) Application number: 19159349.0
(22) Date of filing: 26.02.2019
(51) Int. Cl.: B25J 9/16, B25J 15/06, B65B 5/10

(54) **HANDLING DEVICE**
HANDHABUNGSVORRICHTUNG
DISPOSITIF DE MANIPULATION

(30) Priority: 28.08.2018 JP 2018159652
(43) Date of publication of application: 04.03.2020
(73) Proprietor: KABUSHIKI KAISHA TOSHIBA, Minato-ku Tokyo (JP); Toshiba Infrastructure Systems & Solutions Corporation, Kawasaki-shi, Kanagawa 212-0013 (JP)
(72) Inventor: Eto, Haruna, Tokyo (JP); Ogawa, Akihito, Tokyo (JP); Tokura, Seiji, Tokyo (JP); Komoda, Kazuma, Tokyo (JP); Jiang, Ping, Tokyo (JP); Sugahara, Atsushi, Tokyo (JP)
(74) Representative: Hoffmann Eitle

(56) References cited:
- US-A1- 2016 221 187
- US-B1- 9 205 558
- US-B1- 9 821 458

## Description

### FIELD

Embodiments of the present invention relate to a handling device.

### BACKGROUND

Automation systems that utilize picking systems for logistics often perform a box packing operation for packing picked items into shipping boxes. A filling rate of a box filled with items by such a packing operation affects transportation efficiency and transportation cost. Therefore, improvement of the filling rate in box packing is an important point requested for performance of picking systems for logistics. For example, Patent Document 1 describes a box packing planning method for box packing based on geometric model data of a storage container and objects to be stored and data acquired by sensing. In addition, Patent Document 2 describes an adsorption devise that holds a plurality of bag-shaped objects with raised belly parts, narrows intervals between the plurality of lifted objects, and stores them in a corrugated board case or the like.

On the other hand, when box packing is performed while filling items from one corner of a box to another, for example, in a conventional handling device in which only a grasping success rate is considered, a part of a hand mechanism (a holding unit) that grasps the items may interfere with an inner wall of the box or other items in the box or the like. In this case, since the items cannot be placed in a packed manner, the filling rate of the box filled with the items decreases. However, in the techniques described in Patent Document 1 and Patent Document 2, the interference of the holding unit with the inner wall of the box or other items in the box or the like is not considered.
Patent Document 1: PCT International Publication No. WO2017/149616
Patent Document 2: Japanese Laid-Open Patent Application Publication 2018-89732

US 2016/221187 A1 describes methods and systems for selecting a grasp point on an object. In particular, a robotic manipulator may identify characteristics of a physical object within a physical environment. Based on the identified characteristics, the robotic manipulator may determine potential grasp points on the physical object corresponding to points at which a gripper attached to the robotic manipulator is operable to grip the physical object. Subsequently, the robotic manipulator may determine a motion path for the gripper to follow in order to move the physical object to a drop-off location for the physical object and then select a grasp point, from the potential grasp points, based on the determined motion path. After selecting the grasp point, the robotic manipulator may grip the physical object at the selected grasp point with the gripper and move the physical object through the determined motion path to the drop-off location.

US 9 821 458 B1 describes methods and systems for determining a safe trajectory for movement of an object by a robotic system. According to these various implementations, the robotic system may determine at least first and second candidate trajectories for moving the object. For at least a first point along the first candidate trajectory, the robotic system may determine a predicted cost of dropping the object at the first point along the first candidate trajectory. And for at least a second point along the second candidate trajectory, the robotic system may determine a predicted cost of dropping the object at the second point along the second candidate trajectory. Then, based on these various determined predicted costs, the robotic system may select between the first and second candidates trajectories and may then move the object along the selected trajectory.

US 9 205 558 B1 describes control of a suction gripper with multiple suction cups. One example system includes a suction gripper and a control system. The suction gripper may include a vacuum pump, a plurality of suction cups coupled to the vacuum pump, and a plurality of sensors corresponding to the suction cups, where a sensor is positioned between the vacuum pump and a suction cup and measures a vacuum pressure of the suction cup. The control system may be configured to activate the vacuum pump to cause the suction gripper to apply suction to an object through one or more active suction cups, receive sensor data indicative of the vacuum pressure of the one or more active suction cups from the corresponding sensors, identify at least one suction cup to deactivate from the one or more active suction cups, and deactivate the at least one identified suction cup.

### BRIEF DESCRIPTION OF THE DRAWINGS

FIG. 1 is a diagram schematically showing a conveyance system according to one embodiment.
FIG. 2 is a perspective view showing a holding unit of one embodiment.
FIG. 3 is a bottom view showing an arrangement layout of a plurality of adsorption units according to one embodiment.
FIG. 4 is a diagram for explaining a holding posture and a holding position.
FIG. 5 is a block diagram showing a system configuration of a conveyance system according to one embodiment.
FIG. 6 is a diagram showing a state of grasping an object at an end of a holding unit of one embodiment.
FIG. 7 is a diagram for explaining a plurality of holding postures and holding positions and packing densities according to the holding postures and holding positions.
FIG. 8 is a diagram for explaining a plurality of holding postures and holding positions and packing densities according to the holding postures and holding positions.
FIG. 9 is a diagram for explaining geometric pattern classification for each grasping method.
FIG. 10 is a diagram for explaining geometric pattern classification for each grasping method.
FIG. 11 is a diagram for explaining geometric pattern classification for each grasping method.
FIG. 12 is a diagram showing an example of a plurality of holding postures and holding positions of a holding unit according to one embodiment.
FIG. 13 is a diagram showing an example of classification of elements that affect conveyance efficiency.
FIG. 14 is a diagram showing an example of a scoring method.
FIG. 15 is a flowchart showing an example of a processing flow of a control unit according to one embodiment.

### DETAILED DESCRIPTION

The problem is solved by the subject matter of the independent claims. Examples and technical descriptions of apparatuses, products and/or methods in the description and/or drawings which are not covered by the claims are presented not as embodiments of the invention but as background art or examples useful for understanding the invention. According to one example, a handling device of an embodiment includes a holding unit and a control unit. The holding unit can hold an object. When an outline of the holding unit protrudes from an outline of the object when viewed from a direction in which the object and the holding unit overlap, the control unit controls the holding unit to hold the object at a position of an end of the holding unit.

Hereinafter, a handling device and a conveyance system according to the embodiment will be described with reference to the drawings. Also, in the following description, components having the same or similar functions are denoted by the same reference numerals. Redundant explanations of those configurations may be omitted in some cases. In addition, the expression "based on XX" in the present application means "based on at least XX," and also includes a case based on another element in addition to XX. Also, the expression "based on XX" is not limited to the case where XX is directly used, and also includes the case where it is based on operations and processing performed on XX. The expression "XX" means an arbitrary element (for example, arbitrary information).

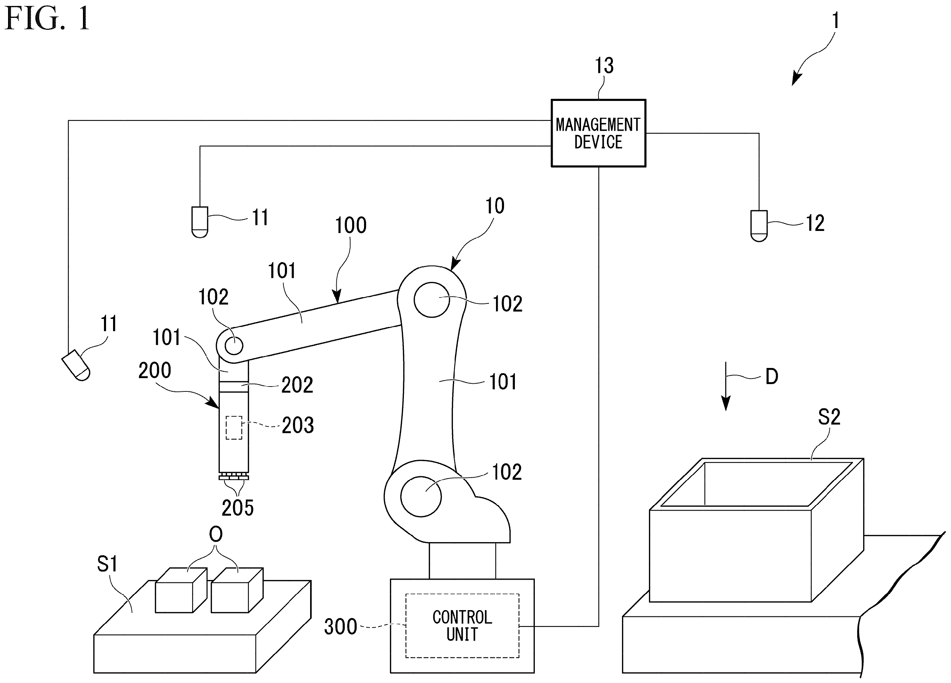

One embodiment will be described with reference to FIGS. 1 to 15. FIG. 1 is a diagram schematically showing a conveyance system 1 including a handling device 10 of the present embodiment. The conveyance system 1 is, for example, a handling system (a picking system) for logistics. The conveyance system 1 moves an object (an object to be held or an object to be conveyed) O positioned at a movement source S1 to a movement destination S2.

The movement source S1 is, for example, any of various conveyors, various types of pallets, or containers such as totes and collapsible containers, but is not limited thereto. Various types of objects O having different sizes and weights are randomly placed on the movement source S1. In the present embodiment, the object O to be held varies from a small object such as one of 5 square cm to a large object such as one of 30 square cm. Further, the object O varies from a light one such as one of several tens of g to a heavy one such as one of several kg. However, the size and weight of the object O are not limited to the above examples.

The movement destination S2 is, for example, a container such as a tote or a collapsible container, but is not limited thereto. The term "container" broadly means members (for example, box-shaped members) which can contain the object O. Hereinafter, for convenience of explanation, the "movement destination S2" may be referred to as a "destination container S2." However, the handling device 10 and the conveyance system 1 may move the object O to a movement destination S2 other than a container.

Also, the handling device 10 and the conveyance system 1 are not limited to a handling system for logistics, and can be widely applied to industrial robot systems or other systems. Herein, the terms "handling device" and "conveyance system" are not limited to devices and systems intended primarily to convey objects, but also include devices and systems that involve conveying (moving) objects as part of product assembly or for other purposes.

First, an overall configuration of the conveyance system 1 will be described. As shown in FIG. 1, the conveyance system 1 includes, for example, a handling device 10, one or more first detectors 11, one or more second detectors 12, and a management device 13.

The handling device 10 is, for example, a robot device that holds an object O positioned at a movement source S1 and moves the held object O to a movement destination S2 (storage area). The handling device 10 can communicate with the management device 13 by wire or wirelessly. The handling device 10 will be described later in detail.

The first detector 11 is a camera or any of various sensors disposed near the movement source S1 (for example, immediately above or obliquely above the movement source S1). The first detector 11 acquires, for example, information on the object O located at the movement source S1 and information on the movement source S1. The information acquired by the first detector 11 is, for example, "image data," "distance image data," and/or "shape data." The "distance image data" is image data having distance information in one or more directions (for example, depth information from an arbitrary reference plane set above the movement source S1). The "shape data" is information indicating an outline of the object O or the like. The information detected by the first detector 11 is output to the management device 13. Also, the first detector 11 may be provided as a part of the handling device 10. In this case, the information detected by the first detector 11 may be directly output to a control unit 300 (which will be described later) of the handling device 10.

Further, if the handling device 10 is configured to be able to acquire information on the object O located at the movement source S 1 and information on the movement source S1 before performing the operation of taking the object O out of the movement source S1, it is unnecessary to have a configuration in which this information is acquired using the first detector 11. For example, information on an object O located at the movement source S1 and information on the movement source S1 are registered in advance in a database on a server (not shown), and the control unit 300 (which will be described later) or the management device 13 may acquire this information from the database.

However, for example, there is a possibility of the position, posture, etc., of the object O changing due to the occurrence of shaking or the like during system operation. Therefore, it is preferable that the conveyance system 1 include a configuration capable of acquiring the latest information on the object O and the movement source S1.

The second detector 12 is a camera or any of various sensors disposed near the destination container S2 (for example, immediately above or obliquely above the destination container S2). The second detector 12 detects, for example, information on the shape of the destination container S2 (including shapes of inner wall surfaces and a partition) and information on the object O previously placed in the destination container S2. The information acquired by the second detector 12 is, for example, "image data," "distance image data," and/or "shape data." Also, the second detector 12 may be provided as a part of the handling device 10. In this case, the information detected by the second detector 12 may be directly output to the control unit 300 of the handling device 10.

The management device 13 manages and controls the entire conveyance system 1. For example, the management device 13 acquires information detected by a first detector 11 and the second detector 12, and outputs the acquired information to the handling device 10.

Next, the handling device 10 will be described.

As shown in FIG. 1, the handling device 10 includes, for example, a moving mechanism 100, a holding unit 200, and a control unit 300 (a control device).

The moving mechanism 100 is a mechanism for moving the holding unit 200 to a desired position. For example, the moving mechanism 100 is a six-axis vertical articulated robot arm, and includes a plurality of arm members 101 and a plurality of rotating units 102 rotatably connected to the plurality of arm members 101. However, the moving mechanism 100 may be a three-axis orthogonal robot arm or a mechanism for moving the holding unit 200 to a desired position by other configurations. For example, the moving mechanism 100 may be a flying object (e.g., a drone) or the like that lifts and moves the holding unit 200 by a rotary blade.

The holding unit 200 is a holding mechanism that holds the object O positioned at the movement source S1. The holding unit 200 is connected to the moving mechanism 100 through a rotating unit 202. For example, the holding unit 200 has a suction device 203 and an adsorption unit 205 communicating with the suction device 203, and holds the object O by suction. However, the holding unit 200 may be a holding unit that holds the object O by holding the object O by a plurality of holding members, or may be a holding unit that holds the object O by other mechanisms. Also, in the following description, an example in which the holding unit 200 has the adsorption unit 205 will be described.

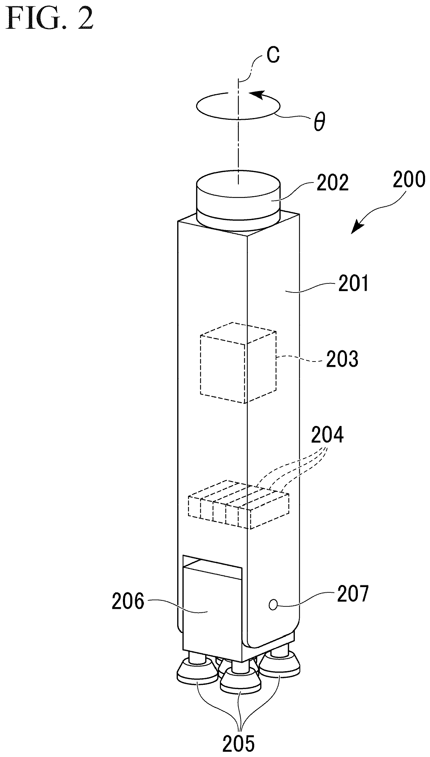

FIG. 2 is a perspective view showing the holding unit 200 of the present embodiment. The holding unit 200 has, for example, a base 201, the rotating unit 202, the suction device 203, a plurality of switching valves 204, a plurality of adsorption units 205 (for example, suction pads), a base tip section 206 and a rotating unit 207.

The base 201 has, for example, a cubic outline and forms an outer shell of the holding unit 200. The base 201 is connected to the moving mechanism 100 through the rotating unit 202. The base 201 may be formed in a box shape or may be configured only by frames.

The rotating unit 202 is provided between the base 201 and the moving mechanism 100, and rotatably connects the base 201 to the moving mechanism 100. A rotational center axis C of the rotating unit 202 substantially coincides with a direction in which a tip portion of the moving mechanism 100 and the base 201 are arranged. The rotating unit 202 can rotate the base 201 of the holding unit 200 in the θ direction in the drawing and the direction opposite thereto with respect to the moving mechanism 100. Also, the rotating unit 202 may be provided not as a part of the holding unit 200 but as a part of the moving mechanism 100.

The suction device 203 is provided inside the base 201. The suction device 203 is, for example, a vacuum pump. The suction device 203 communicates with each of the plurality of adsorption units 205 through a hose or the like. By driving the suction device 203, the pressure in each adsorption unit 205 becomes lower than atmospheric pressure, and the object O is sucked and held by the adsorption unit 205.

The plurality of switching valves 204 are provided one to one with respect to a plurality of adsorption units 205. Each switching valve 204 can switch between a first state for communicating the adsorption unit 205 corresponding thereto with the suction device 203 and a second state for blocking the communication between the adsorption unit 205 and the suction device 203 and communicating the adsorption unit 205 with the outside of the handling device 10 (an atmospheric pressure space). For example, when the object O is relatively small, the handling device 10 causes only one or a few adsorption units 205 selected from the plurality of adsorption units 205 to function as adsorption units 205 (hereinafter referred to as "effective adsorption units 205E") used for holding. Also, in some of the drawings described below, by applying a dot pattern to the effective adsorption units 205E among the plurality of adsorption units 205, the effective adsorption units 205E and the other adsorption units 205 are distinguished from each other.

The plurality of adsorption units 205 are arranged side by side at one end portion of the base tip section 206 (which will be described later). Each of the adsorption unit 205 has an outline smaller than the smallest object positioned at the movement source S1. The handling device 10 adsorbs and holds the object O using only one or more effective adsorption units 205E selected from the plurality of adsorption units 205. In the present embodiment, an object O of 5 square cm can be placed in the movement source S1, and the adsorption unit 205 is, for example, a circular shape having a diameter of 4 cm.

The base tip section 206 is connected to one end portion of the base 201 through the rotating unit 207. As described above, five adsorption units 205 are provided in the base tip section 206.

The rotating unit 207 is provided between the base tip section 206 and the base 201, and rotatably connects the base tip section 206 to the base 201.

Also, as described above, the moving mechanism 100 is a six-axis vertical articulated robot arm, and can take various positions and postures. Further, by providing the base tip section 206 and the rotating unit 207, the degree of freedom of one axis is further given to a tip of the holding unit 200. Thus, for example, in the same way that a person can put his or her arm in a straight vertical direction from above a box and take various hand postures only by horizontal rotation of the arm itself and a tilting movement of the wrist when taking an object out of a box having a deep bottom, the moving mechanism 100 can also take various postures for grasping the object.

Further, as described above, the first detector 11 for recognizing an internal object O is provided above the movement source S1. Due to various errors occurring in the work of moving the object O, there is a possibility that some positional deviation may occur before and after the operation of grasping the object O. On the other hand, for example, the handling device 10 moves the grasped object O and passes it past the front of a laser range finder (LRF; laser sighting device) (not shown). In this way, the handling device 10 can confirm the grasping state of the object O and can recognize the positional relationship between the holding unit 200 and the object O more accurately.

In addition, it is preferable that the LRF be provided, for example, in the vicinity of a movement path when the holding unit 200 moves toward the destination container S2. In this case, the handling device 10 can confirm the grasping state of the object O with less operations. This shortens the operation time of the whole system.

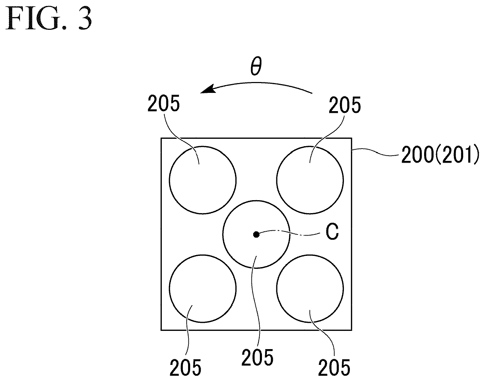

FIG. 3 is a bottom view showing an arrangement layout of the plurality of adsorption units 205 according to the present embodiment. In the present embodiment, the outline of the holding unit 200 (for example, the outline of the base tip section 206 or the base 201) is, for example, a square shape of 12 cm × 12 cm . As described above, the holding unit 200 has five adsorption units 205. The five adsorption units 205 include one adsorption unit 205 disposed substantially at the center of the holding unit 200 and four adsorption units 205 separately disposed around the adsorption unit 205 to correspond to four corners of the holding unit 200. These four adsorption units 205 can rotate in the θ direction and the opposite direction thereto around the rotational center axis C of the rotating unit 202 by rotating the rotating unit 202.

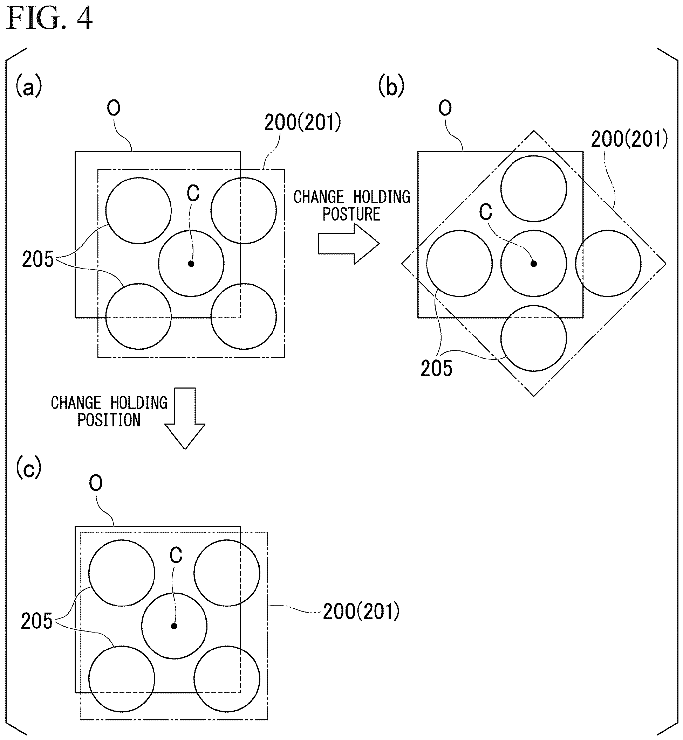

Here, the "holding posture" and "holding position" used in the specification will be defined. FIG. 4 is a diagram for explaining the "holding posture" and "holding position." The "holding posture" used in the specification is an angular position (a rotational position in the θ direction) of the holding unit 200 with respect to the object O. For example, when the "holding posture" is changed from the state (a) in FIG. 4, a position of the center (the rotational center axis C of the rotating unit 202) of the holding unit 200 does not change from the state (a) in FIG. 4, but an orientation of the outline of the holding unit 200 with respect to the outline of the object O changes. Also, the holding posture of the holding unit 200 can be changed by the rotation of the rotating unit 202.

On the other hand, the "holding position" used in the specification is a position at which the object O is held in the holding unit 200, which changes when the holding unit 200 is moved parallel to the object O. That is, the "holding position" indicates a range where the object O overlaps in the range expressed by the outline of the holding unit 200 when viewed from the direction in which the object O and the holding unit 200 overlap each other. For example, when the "holding position" is changed from the state (a) in FIG. 4, although the "holding posture" of the holding unit 200 does not change from the state (a) in FIG. 4, the position of the center of the holding unit 200 with respect to the center of the object O changes, and the range where the object O overlaps in the range expressed by the outline of the holding unit 200 changes. Also, the holding position of the holding unit 200 can be changed by the operation of the moving mechanism 100.

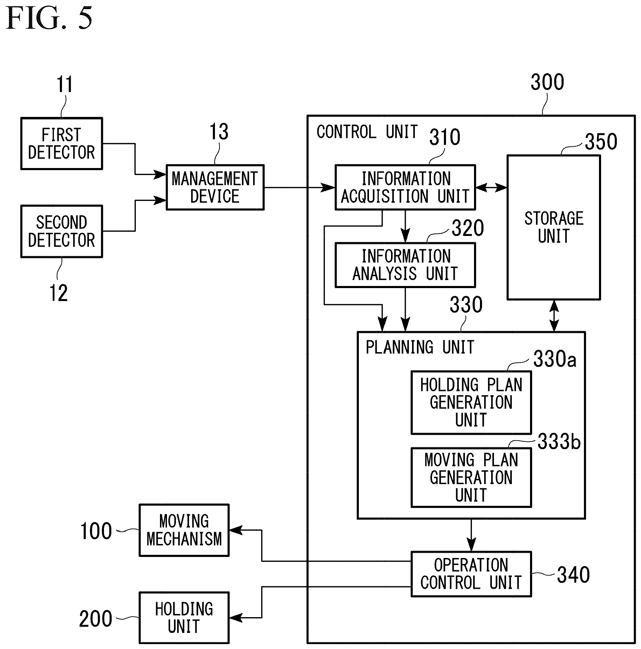

Next, the control unit 300 will be described. The control unit 300 controls the overall operation of the handling device 10. FIG. 5 is a block diagram showing a system configuration of the conveyance system 1. The control unit 300 includes an information acquisition unit 310, an information analysis unit 320, a planning unit 330, an operation control unit 340, and a storage unit 350.

For example, one or more processors such as a central processing unit (CPU) or a graphics processing unit (GPU) execute a program stored in a program memory, thereby implementing the whole or a part of each functional unit (for example, the information acquisition unit 310, the information analysis unit 320, the planning unit 330, and the operation control unit 340) of the control unit 300. However, all or some of these functional units may be implemented by hardware (for example, a circuit unit; circuitry) such as large scale integration (LSI), application specific integrated circuit (ASIC), field-programmable gate array (FPGA), or programmable logic device (PLD). Also, all or some of the functional units may be realized by the software function units and the hardware in combination. The storage unit 350 is realized by flash memory, electrically erasable programmable read-only memory (EEPROM), read-only memory (ROM; memory dedicated to reading), or random access memory (RAM; memory capable of reading and writing).

For convenience of explanation, the storage unit 350 will be described first. For example, information indicating the outline of the holding unit 200 (hereinafter referred to as "holding unit outline information") is stored in the storage unit 350.

The "holding unit outline information" includes information indicating the outline of the holding unit 200 when viewed from a specific direction D (see FIG. 1). The specific direction D is, for example, a direction in which the object O and the holding unit 200 overlap each other at the timing of placing the object O in the destination container S2 (for example, the timing immediately before releasing the object O). In another viewpoint, the "specific direction D" is the direction in which the adsorption unit 205 comes into contact with the object O when the holding unit 200 having the adsorption unit 205 is installed.

Also, the holding unit outline information may be stored in the management device 13 instead of being stored in the storage unit 350 of the handling device 10, or may be stored in another device which can communicate with the handling device 10 via a network.

Next, each functional unit of the control unit 300 will be described. The information acquisition unit 310 acquires the information detected by the first detector 11 and the second detector 12 from the management device 13. The "acquisition" used in in the specification is not limited to the case of acquiring information by transmitting a transmission request, but also includes the case of acquiring information by passively receiving the information. The information acquisition unit 310 outputs the information acquired from the first detector 11 and the second detector 12 to the information analysis unit 320.

The information analysis unit 320 generates various types of information used for controlling the handling device 10 based on the information detected by the first detector 11 and the second detector 12. For example, the information analysis unit 320 generates at least some of the information by performing predetermined image processing on the image data or the distance image data. The above information includes, for example, "object outline information," "movement source shape information," "movement destination shape information," and "movement destination loading information." The information analysis unit 320 outputs the information to the planning unit 330.

The "object outline information" is, for example, image data of the object O, distance image data of the object O, shape data of the object O, or information derived from at least one of them. The "object outline information" is information indicating the outline of the object O (object O to be held) located at the movement source S1. The "object outline information" includes, for example, information indicating the outline of the object O when viewed from the specific direction D.

The "movement source shape information" is information indicating the shape of the movement source S1 which becomes an obstacle when the object O of the movement source S1 is held by the holding unit 200. The information analysis unit 320 generates the "movement source shape information" based on information detected by the first detector 11, for example.

The "movement destination shape information" is information indicating the shape of the move destination S2 which becomes an obstacle when the object O is moved to the movement destination S2. For example, the "movement destination shape information" is information indicating a wall that defines an inner wall surface of the destination container S2 and a partition provided inside the destination container S2. The "movement destination loading information" is information indicating the object O precedingly placed in the destination container S2. The information analysis unit 320 generates the "movement destination shape information" and the "movement destination loading information" based on information detected by the second detector 12, for example.

Next, the planning unit 330 will be described. The planning unit 330 has a holding plan generation unit 330a and a movement plan generation unit 330b. The holding plan generation unit 330a generates a holding plan for holding the object O located at the movement source S 1 with the holding unit 200. The movement plan generation unit 330b generates a movement plan for moving the object O held by the holding unit 200 to the movement destination S2.

### (Processing of holding plan generation unit)

First, the holding plan generation unit 330a will be described. The holding plan generation unit 330a of the present embodiment determines the holding posture and the holding position of the holding unit 200 with respect to the object O based on how the holding unit 200 is protruding with respect to the outline of the object O when viewed from the direction in which the object O and the holding unit 200 overlap (for example, the specific direction D). Also, in the following description, the "protruding" refers to, for example, a case of viewing from the specific direction D as a reference.

Here, the superiority or inferiority of various holding postures and holding positions of the holding unit 200 when the object O is moved into the destination container S2 (so-called box packing is performed) will be described. Since the above-described holding device 200 can be freely operated, for example, by shifting at intervals of 1 mm or rotating at intervals of 1 degree, the handling device 10 can grasp the object O at various holding postures and holding positions. Here, the selection of the best holding posture and holding position becomes important for improving the filling rate of the box and improving the transportation efficiency.

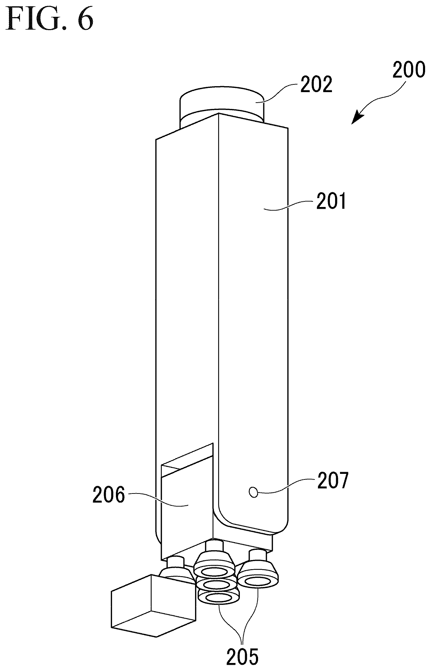

The holding plan generation unit 330a performs evaluation according to an arbitrary criterion from among various holding postures and holding positions, and selects the best holding posture and holding position. In some cases, for example, as shown in FIG. 6, the holding plan generation unit 330a may select the holding position for grasping the object O at a holding position closer to the end than the center of the base tip section 206 (for example, using the adsorption unit 205 closer to the end of the base tip section 206). A case of making the selection as described above is, for example, a case in which the outline of the holding unit 200 protrudes from the outline of the object O when viewed from the direction in which the object O and the holding unit 200 overlap.

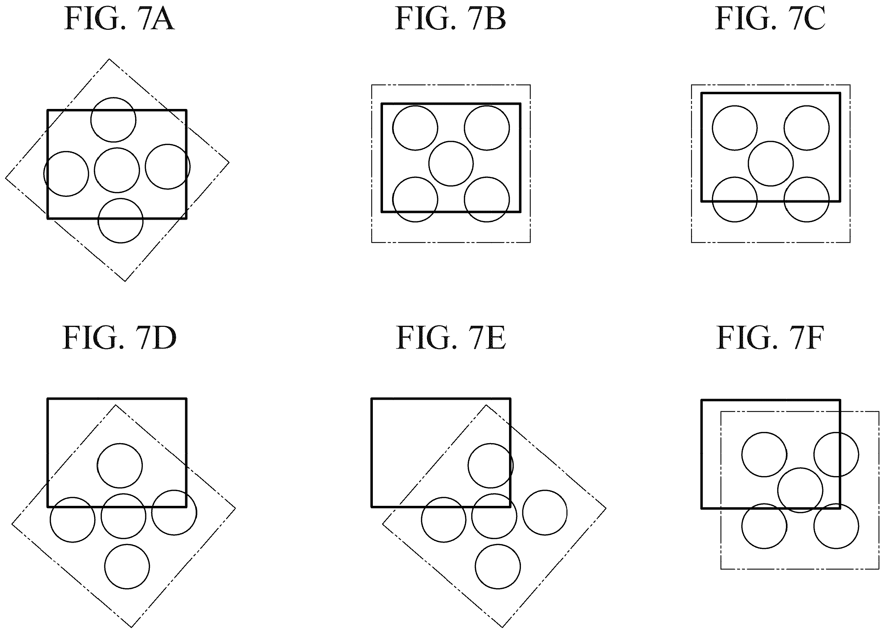

As described above, in the present embodiment, the holding unit 200 includes five adsorption units. In this case, a plurality of holding postures and holding positions, for example, as shown in FIG. 7, can be considered.

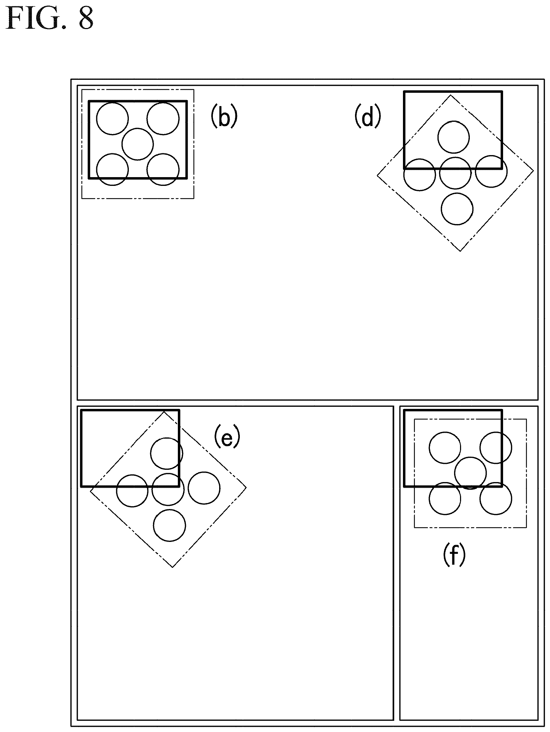

FIGS. 7 and 8 are diagrams for illustrating a plurality of holding postures and holding positions, and box packing density due to the holding postures and holding positions. FIG. 7(a) shows a holding posture and a holding position where the outline of the holding unit 200 protrudes from four sides (that is, all sides) of the outline of the object O. When grasping the object O in this holding posture and at holding position, the holding unit 200 interferes with the inner wall of the destination container S2. Therefore, the handling device 10 cannot place and pack the object O along the inner wall of the destination container S2.

The holding posture and the holding position shown in FIG. 7(b) are different only in the holding posture from the holding posture and the holding position shown in FIG. 7(a). When grasping the object O in this holding posture and holding position, it is possible to place and pack the object O to a position close to the inner wall of the destination container S2, as shown in FIG. 8 (b). However, since the holding unit 200 also interferes with the inner wall of the destination container S2, the object O cannot be placed to fill the container S2 to conform to the inner wall (to be pressed against the inner wall) of the destination container S2.

The holding posture and the holding position shown in FIG. 7(c) are different only in the holding position from the holding posture and the holding position shown in FIG. 7(b). The holding position in FIG. 7(c) is closer to the end of the base tip section 206 than the holding position in FIG. 7(b). Therefore, when grasping the object O in the holding position in FIG. 7 (c), it is possible to place the object O further closer to the inner wall of the destination container S2 than grasping it at the holding position in FIG. 7(b). However, FIG. 7(c) also illustrates a holding posture and a holding position where the outline of the holding unit 200 protrudes from four sides (that is, all sides) of the outline of the object O. Therefore, even when grasping the object O in the holding posture and the holding position in FIG. 7(c), the holding unit 200 interferes with the inner wall of the destination container S2. Therefore, the handling device 10 cannot place and pack the object O to be pressed against the inner wall of the destination container S2.

In this way, the holding postures and holding positions in FIGS. 7(a), 7(b) and 7(c) are the same in that they are holding postures and holding positions in which the outline of the holding unit 200 protrudes from the four sides of the outline of the object O. However, in order to improve the filling rate of the box, it can be said that the holding posture and the holding position of (b) are more preferable than those of (a), and the holding posture and the holding position of (c) are more preferable than those of (b).

Further, FIG. 7(d) shows a holding posture and a holding position where the outline of the holding unit 200 protrudes from three sides of the outline of the object O. When grasping the object O in this holding posture and holding position, it is possible to place the object O in a packed manner to be pressed against the inner wall of the destination container S2 (in contact with the inner wall), as shown in FIG. 8(d). However, when the object O is grasped in this holding posture and holding position, the object O cannot be placed in a packed manner to be pressed against the corner of the destination container S2.

FIG. 7(e) shows a holding posture and a holding position where the outline of the holding unit 200 protrudes from two sides of the outline of the object O. When grasping the object O in this holding posture and holding position, it is possible to place the object O in a packed manner to be pressed against the corner of the destination container S2, as shown in FIG. 8 (e). However, for example, when the width of a storage area in the destination container S2 is narrow, the holding unit 200 interferes with the inner wall of the destination container S2 or the other object O precedingly placed, so that the object O cannot be placed to be pressed against the corner of destination the container S2.

FIG. 7(f) shows a holding posture and a holding position where the outline of the holding unit 200 protrudes from two sides of the outline of the object O. When grasping the object O in this holding posture and holding position, it is possible to place the object O in a packed manner to be pressed against the corner of the destination container S2 even when the width of the storage area in the destination container S2 is narrow, as shown in FIG. 8(f). In this holding posture and holding position, the object O can be relatively easily placed in a packed manner to be pressed against the corner of the destination container S2, and another object O can also be relatively easily placed in a packed manner with respect to the precedingly placed object O. Therefore, in order to improve the filling rate of the box, it can be said that the holding posture and holding position in FIG. 7(f) are more preferable among the plurality of holding postures and holding positions shown in FIG. 7(a) to 7(f).

In the present embodiment, the holding plan generation unit 330a evaluates the protruding of the holding unit 200 from the outline of the object O for each of the plurality of holding postures based on the information indicating the outline of the object O (the "object outline information" described above) and the information indicating the outline of the holding unit 200 (the "holding unit outline information" described above). Further, in the present embodiment, the holding plan generation unit 330a evaluates the protruding of the holding unit 200 from the outline of the object O in each of the plurality of holding positions with respect to each of the plurality of holding postures.

More specifically, in the present embodiment, the holding plan generation unit 330a evaluates the protruding of the holding unit 200 from the outline of the object O based on a protruding amount of the holding unit 200 from the outline of the object O. The "protruding amount" means the number of sides from which the holding unit 200 protrudes out of the outline of the object O, for example, when the outline of the object O is regarded as polygonal (for example, when the outline is registered as a polygon or approximated to a polygon).

As described above, the holding plan generation unit 330a may determine a plurality of holding postures and holding positions with different angular positions of the holding unit 200 with respect to the object O. In this case, the holding plan generation unit 330a performs the above processing for each of the plurality of determined holding postures and holding positions, and specifies a minimum value of the protruding amount in the holding posture and the holding position for each of a plurality of holding postures and holding positions and a holding position where the protruding amount becomes the minimum value in the holding posture and the holding position.

The holding plan generation unit 330a determines a holding posture and a holding position of the holding unit 200 to be employed from among a plurality of determined holding postures and holding positions based on the evaluation results. For example, the holding plan generation unit 330a determines a holding posture and a holding position of the holding unit 200 from a plurality of holding postures and holding positions so that the protruding amount satisfies a specific condition.

"Satisfying a specific condition" means, for example, the case that the protruding amount becomes the minimum or equal to or less than a predetermined value among the plurality of holding postures and holding positions determined by the holding plan generation unit 330a. As described above, the protruding amount is, for example, the number of sides from which the holding unit 200 protrudes out of the outline of the object O when the outline of the object O is regarded as polygonal.

Therefore, when the protruding amount is the number of sides from which the holding unit 200 protrudes out of the outline of the object O, the "satisfying a specific condition" means, for example, the case that the number of sides where the holding unit 200 protruding out of the outline of the object O is the minimum or equal to or less than a predetermined number (for example, one or less) among a plurality of holding postures. However, the "equal to or less than a predetermined number" is not limited to "one or less," and may be set to "two or less" based on a type of polygon or the like to which the holding unit 200 is approximated, or may be set to other numbers or less.

In this way, when viewed from the direction in which the object O and the holding unit 200 overlap, the control unit 300 causes the holding unit 200 to hold the object O in such a manner that at least one surface (when pressing the object O against a boundary surface of a storage area) or at least two surfaces (when pressing the object O against a corner of a storage area) of the object O that can conform to the boundary surface of the storage area or a side surface of another object O precedingly placed is not covered by the holding unit 200.

Further, the holding plan generation unit 330a may be controlled to specify at least one of a direction in which the holding unit 200 should not protrude from the outline of the object O and a side of the object O in which the holding unit 200 should not protrude based on the information related to the movement destination S2 of the object O (for example, the "movement destination shape information" and the "movement destination loading information" described above). Then, the holding plan generation unit 330a may increase the weight to the protruding amount of the holding unit 200 with respect to the specified direction or the specified side of the object O. "To increase the weight" as used herein means to make it difficult to be adopted as a holding posture and a holding position of the holding unit 200. Thus, the holding plan generation unit 330a can suppress the selection of the holding posture and holding position where the outline of the holding unit 200 protrudes from the specified direction or the side of the specified object O.

Further, the holding plan generation unit 330a may set restriction conditions related to the holding posture and the holding position of the holding unit 200 based on the information on the movement source of the object O (for example, the "movement source shape information" described above), and selects the holding posture and holding position of the holding unit 200 under the restriction conditions.

Through the processing described above, the holding plan generation unit 330a determines the holding posture and the holding position of the holding unit 200. The holding plan generation unit 330a outputs the determined holding posture and holding position as a control target to the operation control unit 340.

Next, the movement plan generation unit 330b will be described. The movement plan generation unit 330b generates a movement plan that moves the object O held by the holding unit 200 to the movement destination S2 based on the information on the movement destination S2 of the object O (for example, the "movement destination shape information" and the "movement destination loading information" described above). In the present embodiment, the movement plan generation unit 330b generates the movement plan based on the holding posture and the holding position determined by the holding plan generation unit 330a. For example, the movement plan generation unit 330b generates a movement plan in which a direction in which the holding unit 200 does not protrude from the outline of the object O (that is, the side of the object O in which the holding unit 200 does not protrude therefrom) is adjacent to the inner wall surface of the destination container S2 or the precedingly placed object O.

Next, the operation control unit 340 will be described. The operation control unit 340 controls the holding unit 200 and the moving mechanism 100 based on the holding plan and the movement plan planned by the planning unit 330. For example, the operation control unit 340 controls the moving mechanism 100 and the holding unit 200 based on the holding plan generated by the holding plan generation unit 330a, and holds the object O in the holding posture and at the holding position of the holding unit 200 determined by the holding plan generation unit 330a. The operation control unit 340 controls the moving mechanism 100 and the holding unit 200 based on the movement plan generated by the movement plan generation unit 330b to move the object O into the destination container S2.

When the next object O is placed along the inner wall of the destination container S2 or the side surface of another object O placed in advance, the next object O is placed without any gap. Thus, the operation at the time of releasing grasp by the handling device 10 is assumed to involve the operation of pressing the object O against the inner wall of the destination container S2 or the side surface of the other object O placed in advance. In this case, the holding unit 200 hardly interferes with the inner wall of the box and the side surface of the other object when grasping the object O at a holding position closer to the end than the center of the base tip section 206.

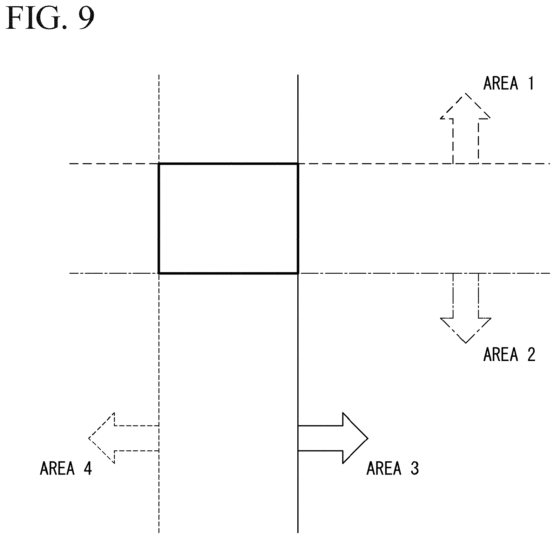

In order to derive quantitative values that represent the difficulty of such interference by calculation, pattern classification may be performed geometrically for each grasping method, for example, as shown in FIGS. 9, 10 and 11. The evaluation can be performed uniquely by assigning scores representing whether or not each pattern is superior to the whole pattern.

FIGS. 9, 10 and 11 are diagrams for illustrating geometric pattern classification for each grasping method.

As shown in FIG. 9, for example, when the object is a quadrangle, the outside of the extension line of one side of the quadrangle can be regarded as one area. As shown in FIG. 9, there are regions 1 to 4 which are regions outside the respective extension lines of the four sides.

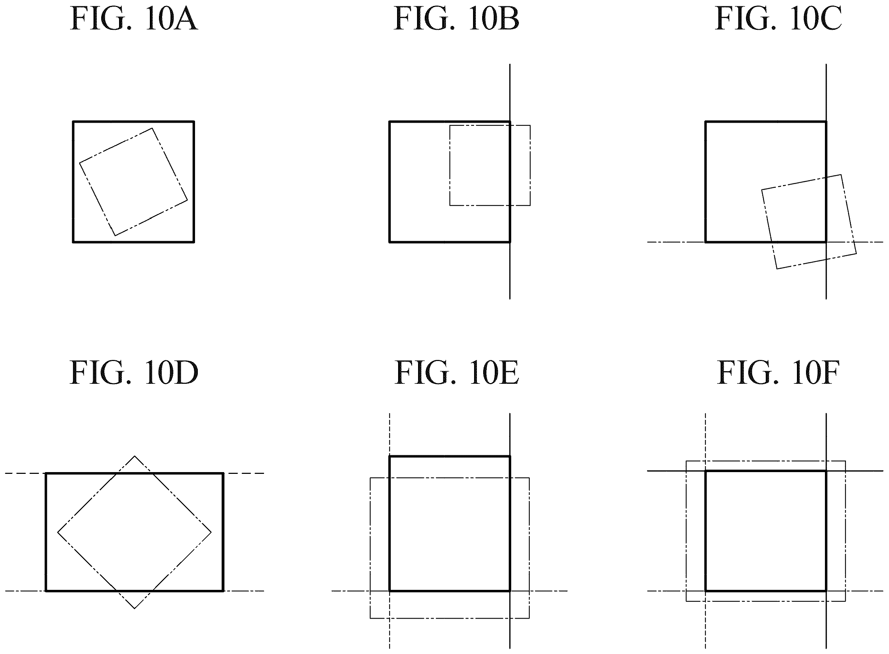

In FIG. 10, a rectangle drawn by a solid line indicates the outline of the object O. Also, a rectangle drawn by a two-dot chain line indicates the outline of the holding unit 200.

In the case of the holding posture and holding position shown in FIG. 10(a), the outline of the holding unit 200 protrudes into none of areas 1 to 4 shown in FIG. 10.

In the case of the holding posture and the holding position shown in FIG. 10(b), the outline of the holding unit 200 protrudes only into the area 3 shown in FIG. 10.

In the case of the holding posture and the holding position shown in FIG. 10(c), the outline of the holding unit 200 protrudes into the area 2 and the area 3 shown in FIG. 10.

In the case of the holding posture and the holding position shown in FIG. 10(d), the outline of the holding unit 200 protrudes into the area 1 and the area 2 shown in FIG. 10.

In the case of the holding posture and the holding position shown in FIG. 10(e), the outline of the holding unit 200 protrudes into the areas 2 to 4 shown in FIG. 10.

In the case of the holding posture and the holding position shown in FIG. 10(f), the outline of the holding unit 200 protrudes into all of the areas 1 to 4 shown in FIG. 10.

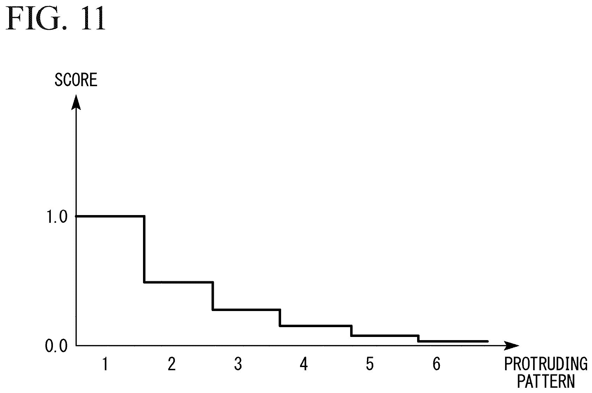

As described above, the holding posture and holding position can be classified in accordance with the type of the protruding (hereinafter referred to as "protruding pattern"). After the holding posture and the holding position are classified as described above, scoring shown in FIG. 11 is performed.

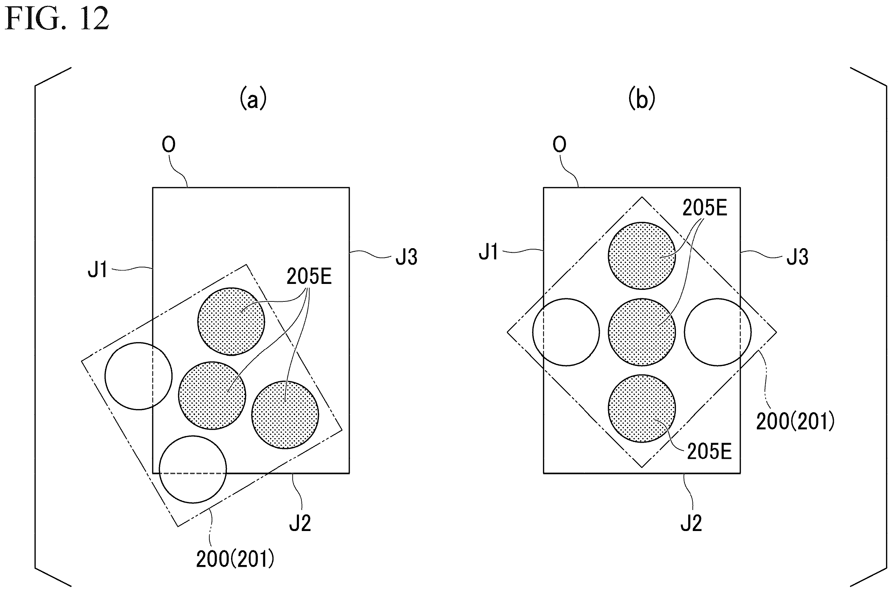

Here, when the holding unit 200 protrudes from two sides in the outline of the object O, the holding plan generation unit 330a may determine the holding posture in which the two sides are continuous with each other as the holding posture of the holding unit 200 in preference to the holding posture in which the two sides are not continuous with each other. FIG. 12 is a diagram showing examples of a plurality of holding postures of the holding unit 200. The phrase "two sides are continuous with each other" means, for example, that the two sides J1 and J2 from the holding unit 200 protrudes in the outline of the object O are continuous with each other (connected to each other), as shown in FIG. 12(a). On the other hand, the phrase "two sides are not continuous with each other" means, for example, that the two sides J1 and J3 from which the holding unit 200 protrudes in the outline of the object O are not continuous with each other (for example, they are opposite sides), as shown in FIG. 12(b)

The handling device 10 can select a grasping method that is advantageous for box packing by providing the configuration described above. However, in general, in a conveyance system, when a grasping method taking only the box packing into account is performed, there may be a case in which the possibility of collision with an obstacle during grasping is increased, and physical stability during grasping and conveying is impaired. In addition, there may be a case in which handling is performed near the limit of the movable range of the robot and thus the arrival time until the robot takes a desired posture increases.

Therefore, the conveyance efficiency can be more effectively improved by weighting various elements affecting the conveyance efficiency in the entire conveyance process rather than considering the improvement of the conveyance efficiency only from the determination of the protruding pattern as described above.

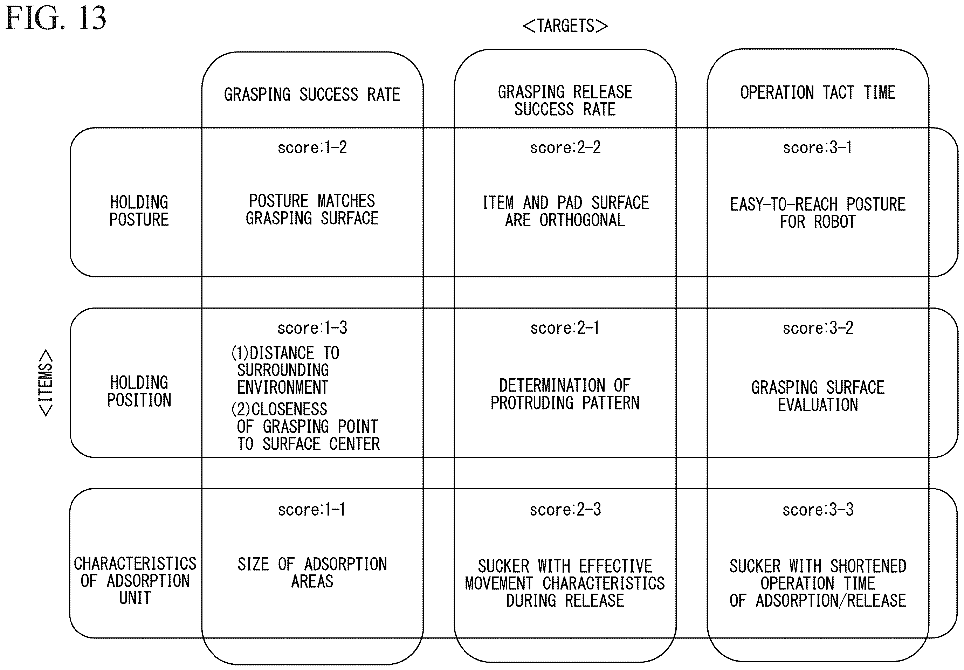

For example, as shown in FIG. 13, various elements affecting the conveyance efficiency can be categorized by the axes representing "Items" and the axes representing "Targets." The elements of the item axis include, for example, "Holding posture," a "Holding position", and "Characteristics of adsorption unit." Also, for the elements of the target axis, for example, there are "Grasp success rate," "Grasp release success rate," and "Operation tact time."

Then, labeling (score: 1-1 to score:3-3) is performed for a total of nine element groups classified by these three items and three targets, for example, as shown in FIG. 13.

For example, as shown in FIG. 13, the "score: 1-1" is labeled for an element related to the characteristics of the adsorption unit among elements that may affect the grasping success rate. Also, "Size of adsorption areas" is mentioned as an element labeled with the "score:1-1." This is an element for evaluating whether or not there are adsorption areas sufficient for the weight of the object O.

Also, as shown in FIG. 13, the "score: 1-2" is labeled for an element related to the holding posture among elements that may affect the grasping success rate. "Grasping surface matches posture" is mentioned as an element labeled with the "score: 1-2." This is an element for evaluating whether or not the holding posture is such a posture in which the adsorption unit 205 is firmly adsorbed to the grasping surface of the object O.

Also, as shown in FIG. 13, the "score: 1-3" is labeled for an element related to the holding position among elements which may affect the grasping success rate. "Distance to surrounding environment" is mentioned as an element labeled with the "score: 1-3." This is an element for evaluating the easiness of movement in the operation in which the handling device 10 moves the object O.

Also, "Closeness of grasped point to surface center" is additionally mentioned as an element labeled with the "score: 1-3." This is an element for evaluating whether or not the object O is stably grasped.

Also, as shown in FIG. 13, the "score:2-1" is labeled for an element related to the holding position among elements that may affect the grasping release success rate. "Decision of protruding pattern (Calculation of protruding amount)" is mentioned as an element labeled with the "score2-1." This is an element improved by the handling device 10 according to the present embodiment, and is an element for evaluating whether or not the object O can be placed in a more packed manner at the destination container S2.

Also, as shown in FIG. 13, the "score:2-2" is labeled for an element related to the holding posture among elements which may affect the holding release success rate. "Whether or not item and pad surface are orthogonal" is mentioned as an element labeled with the "score2-2." This is an element for evaluating whether or not the object O can be placed in a more packed manner in the destination container S2, similarly to the above case, since the object O can be placed in a more packed manner in the destination container S2 when the item and the pad surface are orthogonal to each other.

Also, as shown in FIG. 13, the "score:2-3" is labeled for an element related to the characteristics of the adsorption unit among elements which may affect the grasping release success rate. "Sucker having effective movement characteristics during release" is mentioned as an element labeled with the "score2-3." This is an element for evaluating whether or not the sucker is more effective sucker when the object O is placed in an environment such as a corner section of the destination container S2 at the time of grasping release.

Also, as shown in FIG. 13, the "score:3-1" is labeled for an element related to the holding posture among elements that may affect the operation tact time.

"Easy-to-reach posture for robot" is mentioned as an element labeled with the "score3-1." This is an element for evaluating whether or not the holding posture is such a posture in which the object O can be moved in a shorter operation tact time.

Also, as shown in FIG. 13, the "score:3-2" is labeled for an element related to the holding position among elements that may affect the operation tact time. "Grasping surface evaluation" is mentioned as an element labeled with the "score 3-2." This is an element for evaluating whether or not the holding position is such a position in which the object O can be moved in a shorter operation tact time. This is, for example, because the operation tact time can be shortened by sequentially moving the objects O in order from the object O whose grasping surface is located at a higher position.

Also, as shown in FIG. 13, the "score:3-3" is labeled for an element related to the characteristics of the adsorption unit among elements which may affect the operation tact time. "Sucker with short operation time of adsorption or release" is mentioned as an element labeled with the "score:3-3." This is an element for evaluating whether or not the adsorption unit has characteristics capable of moving the object O in a shorter operation tact time.

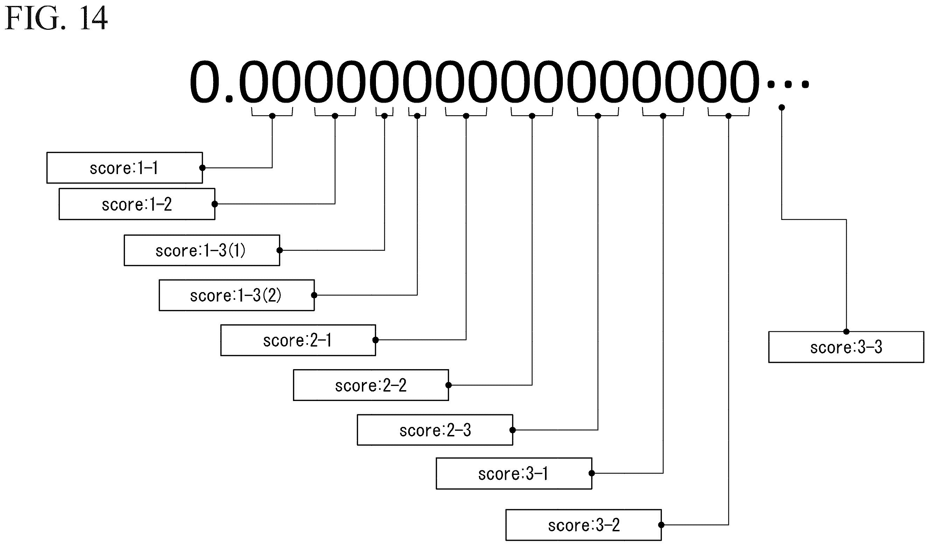

For example, as shown in FIG. 14, weighting is performed for the evaluation value of each of thus labeled element groups while performing calculation for integrating the evaluation values into one. Thus, the conveyance system can automatically select the best decision and execute the processing based on the policies shown by the FIGS. 13 and 14. For example, in the policies shown in FIGS. 13 and 14, in order to stably hold a heavy object, the largest weighting is applied to "Size of adsorption area (score: 1-1)."

The handling device 10 according to the present embodiment performs scoring and weighting with a unified scoring rule for a huge number of holding method candidates (a plurality of holding postures and a plurality of holding positions). Then, the handling device 10 selects a holding method in which the score calculated by such a scoring rule is the best. By using the unified scoring rule, for example, even when there are a plurality of mutually contradictory "items to be prioritized," the handling device 10 can collectively determine and operate.

Also, the policies as described above may be arbitrarily set by, for example, a designer, a customer, or the like of the conveyance system. Alternatively, it may be set in combination with a learning algorithm for automatically updating weighting based on the success or failure of the grasping result while collecting, in a database, a collision detection result obtained from a collision detection device provided for safety, and a result showing the presence or absence of the breakage of a target object at the time of recognizing the object.

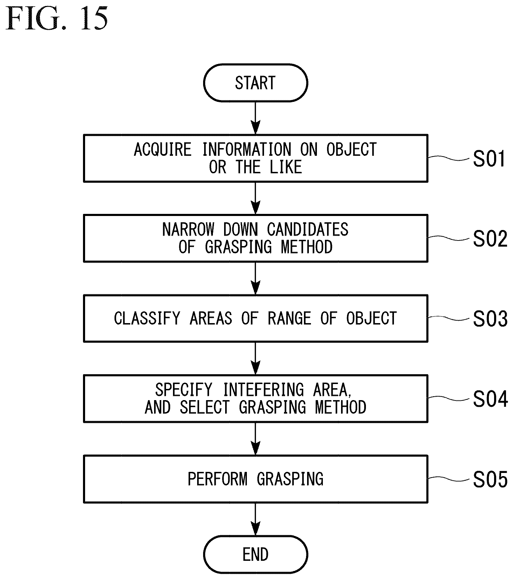

An example of a processing flow of the control unit 300 will be described below. FIG. 15 is a flowchart showing an example of a processing flow of the control unit 300.

The information acquisition unit 310 acquires information on the object O and the like recognized by the first detector 11 via the management device 13 (step S01).

The information analysis unit 320 calculates all or the necessary amount of the holding posture and the holding position to which the holding unit 200 is to be placed with respect to the object O at an arbitrary resolution and narrows down candidates of the grasping method (step S02).

The holding plan generation unit 330a geometrically classifies the surroundings as viewed in a plan view into four areas from the side surface of the object O with which the holding unit 200 is in contact (step S 03).

The holding plan generation unit 330a specifies which of the four areas the outline of the holding unit 200 interferes with in each of the grasping method candidates narrowed down in step S02. In the present embodiment, for example, the number of sides from which the holding unit 200 protrudes in the outline of the object O is calculated. Then, the holding plan generation unit 330a assigns a higher evaluation score in order from the candidates of the grasping method having the larger number of areas that do not interfere (for example, the number of sides protruding from the holding unit 200 from the outline of the object O is smaller).

Then, the holding plan generation unit 330a selects a grasping method having the highest evaluation score (step S04).

The operation control unit 340 controls the moving mechanism 100 and the holding unit 200 to cause the grasping to be executed according to the selected grasping method (step S05). Also, the operation control unit 340 controls the moving mechanism 100 and the holding unit 200 so that box packing is performed by pressing a region that does not interfere with the boundary surface of the storage area.

According to this configuration, the handling device 10 can place the object O to be conveyed in a packed manner in the storage area.

For example, when an object is moved into a destination container (so-called box packing is performed), in order to improve the filling rate of objects in the destination container, for example, it is desirable to place the objects to be conveyed in a packed manner with respect to an inner wall surface of the destination container or a side surface of a precedingly placed object while controlling a grasped object and a holding unit not to interfere with the surroundings. However, in a general conveying device, the holding posture and the holding position with respect to the object are determined only by focusing on the easiness of holding the object at the movement source in many cases, and the holding posture and the holding position (at the movement destination) at the time of box packing are not generally considered. Therefore, during the operation of the box packing, since the holding unit interferes with the destination container or the object placed in advance and the position where the object is placed is largely restricted, the filling rate of the box packing may be lowered in some cases. Also, in general, the holding unit performing the box packing operation is smaller than the outline of the object in many cases, and the holding unit 200 larger than the outline of the object O as in the present embodiment has not been considered.

On the other hand, in the present embodiment, as described above, the handling device 10 has the control unit 300 that determines the holding posture and the holding position of the holding unit 200 with respect to the object O in order to further reduce the interference of the holding unit 200 with the inner wall surface of the movement destination container S2 and the object O placed in advance. Specifically, the handling device 10 holds the object O at the end position of the holding unit 200 when the outline of the holding unit 200 protrudes from the outline of the object O when viewed from the direction in which the object O and the holding unit 200 overlap.

According to this constitution, the holding unit 200 hardly interferes with the destination container S2 and the precedingly placed object O, and the position at which the object O is placed is hardly limited. For this reason, the object O to be conveyed can be easily placed in a packed manner with respect to (the boundary surfaces) such as the inner wall of the destination container S2 or partitions, or the side surfaces of the precedingly placed object O. As a result, the handling device 10 according to the present embodiment can improve the filling rate of the box. Thus, the handling device 10 can improve transportation efficiency and can reduce transportation cost.

Also, when the outline of the holding unit 200 protrudes from the outline of the object O when viewed from the direction in which the object O and the holding unit 200 overlap, the handling device 10 according to the present embodiment may hold the position of end of the object O instead of holding the object O at the position of the end of the holding unit 200.

Further, in the present embodiment, as described above, the handling device 10 has the holding plan generation unit 330a. The holding plan generation unit 330a determines a plurality of holding postures of the holding unit 200 with respect to the object O. The holding plan generation unit 330a evaluates the protruding of the holding unit 200 from the outline of the object O with respect to each of the plurality of holding postures based on the information indicating the outline of the object O. The holding plan generation unit 330a determines the holding posture of the holding unit 200 from among the plurality of holding postures based on the evaluation results. With such a configuration, each of the plurality of holding postures capable of holding the object O can be evaluated by the holding plan generation unit 330a, and a more suitable holding posture can be determined. Thus, the object O may be placed in a more packed manner.

Further, the holding plan generation unit 330a determines a plurality of holding positions of the holding unit 200 with respect to the object O in each of the plurality of holding postures. The holding plan generation unit 330a evaluates the protruding of the holding unit 200 from the outline of the object O at each of the plurality of holding positions for each of the plurality of holding postures. The holding plan generation unit 330a determines the holding posture and the holding position of the holding unit 200 based on the evaluation. According to such a configuration, in addition to the plurality of holding postures, the holding plan generation unit 330a can perform the evaluation for each of the plurality of holding positions in each holding postures, so that a more suitable holding posture and holding position can be determined.

Further, in the present embodiment, as described above, the holding plan generation unit 330a evaluates the protruding amount of the holding unit 200 with respect to the outline of the object O. The holding plan generation unit 330a determines the holding posture and the holding position of the holding unit 200 so that the protruding amount of the holding unit 200 with respect to the outline of the object O satisfies a specific condition. According to such a configuration, the holding posture and the holding position in which the protruding amount with respect to the outline of the object O is comparatively small are determined. Thus, the object O may be placed in a more packed manner.

Further, in the present embodiment, as described above, the protruding amount is the number of sides from which the holding unit 200 protrudes in the outline of the object O. According to such a configuration, the holding posture and the holding position in which the number of sides from which the holding unit 200 protrudes from the outline of the object O are small are determined. Thus, the outline of the holding unit 200 hardly becomes an obstacle, so that the object O may be placed in a more packed manner.

Here, when the holding unit 200 protrudes from two sides in the outline of the object O, the holding posture in which the two sides are continuous with each other may be determined as the holding posture of the holding unit 200 in preference to the holding posture in which the two sides are not continuous with each other. According to such a configuration, the object O to be conveyed can be placed in a more packed manner with respect to the inner wall surface of the destination container S2 and the object O placed in advance.

Further, the closer the outline of the holding unit 200 is in a shape easily pressed against the boundary surface of the storage area, the higher the effect of improving the filling rate of the box becomes. Therefore, the outline of the holding unit 200 is more preferably a quadrangle or a triangle than a circle. Also, it is desirable that the corners of the quadrangle or the triangle are sharper.

Also, in the case of pressing the object O against the boundary surface of the storage area in the operation at the time of box packing, the handling device 10 may include a force sensor. For example, the handling device 10 performs pressing while observing information obtained from the force sensor in real time. Alternatively, at the time of pressing, instead of position control, a constant force may be applied by temporarily controlling the current of the motor. This enables more accurate box packing.

Also, the device may include a presentation unit (not shown) for outputting information indicating the replacement time of each adsorption unit 205 according to the degree of use of each adsorption unit 205. The presentation unit may output the information to a display device (not shown) having a display or the like, for example, and the display device may display information indicating the replacement time of each adsorption unit 205. Alternatively, the presentation unit may output the information to light emitting units (not shown) provided in the vicinity of each adsorption unit 205, and a light emitting unit provided in the vicinity of the adsorption unit 205 that is in the replacement time may emit light.

The control unit 300 may also perform control to change the use frequency of the adsorption units 205 according to the degree of use of each of the plurality of adsorption units 205. Thus, the durability of the handling device 10 (the adsorption unit 205) can be improved.

Although some embodiments and modifications have been described above, the embodiments are not limited to the above examples. For example, some functional units of the control unit 300 may be provided in the management device 13 instead of the handling device 10. For example, the information acquisition unit 310, the information analysis unit 320, the planning unit 330, and the storage unit 350 may be provided in the management device 13. The planning unit 330 is an example of the "information processing unit."

According to at least one embodiment described above, the handling device has a control unit that controls the holding unit to hold the object at the end position of the holding unit in the case where the outline of the holding unit protrudes from the outline of the object when viewed from the direction in which the object and the holding unit overlap each other. According to such a configuration, it is possible to improve the filling rate of the box in which items are packed.

Also, a part or the whole of the conveyance system 1 may be realized by a computer. In this case, the program for realizing the control function may be recorded in a computer-readable recording medium, and the program recorded in the recording medium may be realized by causing a computer system to read and execute the program. Also, the "computer system" is a computer system built in the conveyance system 1 and includes hardware such as an OS and peripheral equipment. Also, the "computer-readable recording medium" means a portable medium such as a flexible disk, a magneto-optical disk, a ROM and a CD-ROM, and a storage device such as a hard disk incorporated in a computer system.

Further, the "computer-readable recording medium" may include those holding a program dynamically for a short period of time such as a communication line when a program is transmitted via a network such as the Internet or a communication line such as a telephone line, those holding a program for a certain period of time like volatile memory inside the computer system which becomes the server or client in this case. Also, the above program may be one for realizing part of the above-described functions, and may be one capable of realizing the above-described function by a combination with a program already recorded in the computer system.

Further, a part or the whole of the conveyance system 1 in the above-described embodiment may be realized as an integrated circuit such as a large scale integration (LSI). Each functional block of the conveyance system 1 may be individually made into a processor, or a part or the whole thereof may be integrated into a processor. In addition, the method of forming an integrated circuit is not limited to LSI, and may be realized by a dedicated circuit or a general-purpose processor. Also, when an integrated circuit technology to replace LSI emerges due to advances in semiconductor technology, an integrated circuit based on the technology may be used.

While some embodiments of the present invention have been described, these embodiments have been presented by way of example and are not intended to limit the scope of the invention. These embodiments can be implemented in various other forms, and various omissions, replacements, and modifications can be made without departing from the scope of the appended set of claims.

## Claims

1. A handling device (10) configured to hold an object positioned at
a movement source and to move the held object to a movement destination, comprising:
a holding unit (200) configured to hold the object (O) positioned at the movement source;
a moving mechanism (100) configured to move the holding unit (200) at a desired position;
a control unit (300) comprising:
an information analysis unit (320);
an information acquisition unit (310) configured to acquire and to output to the information analysis unit information on the object (O) located at a movement source (S1), information on the movement source (S1), information on the shape of the movement destination (S2), and information on the object (O) previously placed in the movement destination (S2); and
the information analysis unit (320) is configured to
generate an object outline information indicating an outline of the object (O) located at the movement source (S1),
a movement source shape information indicating a shape of the movement source (S1) which becomes an obstacle when the object (O) positioned at the movement source (S1) is held by the holding unit (200),
a movement destination shape information indicating the shape of the movement destination (S2) which becomes an obstacle when the held object (O) is moved to the movement destination (S2), and
a movement destination loading information indicating the object (O) previously placed in the movement destination (S2),
the control unit being **characterized by** further comprising:
a planning unit (330) comprising a holding plan generation unit (330a) and a movement plan generation unit (330b), holding plan generation unit (330a) being configured to determine a holding position and a holding posture of the holding unit from a plurality of holding postures and holding positions so that the protruding amount satisfies a specific condition with respect to the object located at the movement source such that the specific condition is a case that a protruding amount becomes a minimum value or less than a predetermined value among the plurality of holding postures and holding positions determined by the holding plan generation unit (330a),
such that the holding unit holds the object (O) located at the movement source in such a manner that the holding unit does not cover at least one surface or at least two surfaces of the object (O) that can conform to a boundary surface of a storage area or a side surface of another object (O) previously placed, wherein the movement destination is the storage area, and
the protruding amount being the number of sides from which the holding unit (200) protrudes out of the outline of the object located at the movement source when viewed from the direction in which the object located at the movement source and the holding unit (200) overlap,
wherein the holding posture is an angular position of the holding unit (200) with respect to the object (O) located at the movement source and
the holding position is a position at which the object (O) is held in the holding unit 200, which changes when the holding unit (200) is moved parallel to the object (O), and
the movement plan generation unit (330b) is configured to generate a movement plan for moving the object (O) held by the holding unit (200) to the movement destination (S2); and
an operation control unit (340) configured to control the holding unit (200) and the moving mechanism (100) based on the holding plan and the movement plan planned by the planning unit (330).

2. The handling device according to claim 1, wherein the holding plan generation unit (330a) of the planning unit (330) is configured to specify at least one of
a direction in which the holding unit (200) should not protrude from the outline of the object (O) located at the movement source and
a side of the object (O) located at the movement source in which the holding unit 200 should not protrude,
based on the movement destination shape information and the movement destination loading information related to the movement destination (S2) of the object (O) located at the movement source, and
the holding plan generation unit (330a) is further configured to increase a weight to the protruding amount of the holding unit (200) with respect to the specified direction or the specified side of the object (O).

3. The handling device according to claim 1, wherein the holding unit (200) is configured to release the object (O) in the storage area (S2).

4. The handling device according to claim 3, wherein the holding unit (200) is configured to press the held object (O) against the boundary surfaces of the storage area or the side surfaces of the object (O) previously placed.

5. The handling device according to claim 1, wherein the holding unit (200) is configured to press the held object (O) against a corner portion configured by two surfaces on either one of the boundary surfaces of the storage area or the side surfaces of the object (O) previously placed.

6. The handling device according to claim 1 or claim 3, wherein the control unit (300) is configured to control the holding unit (200) to hold the object (O) located at the movement source in such a manner that the number of sides of the held object (O) from which the holding unit (200) protrudes from the outline of the object (O) is minimized in view of the direction where the object (O) and the holding unit (200) overlap each other.

7. The handling device according to claim 1 or claim 2,
wherein the holding unit (200) is configured by a plurality of adsorption units (205), and
a presentation unit which is configured to output information indicating a replacement time of each of the adsorption units (205) in accordance with a degree of use of each of the adsorption units (205) is included.

8. The handling device according to claim 1 or claim 3,
wherein the holding unit (200) is configured by a plurality of adsorption units, and
the control unit (300) which is configured to change a use frequency of each of the adsorption units (205) in accordance with a degree of use of each of the adsorption units is included.

## Patentansprüche

1. Eine Handhabungsvorrichtung (10), die so konfiguriert ist, dass sie ein Objekt hält, um
eine Bewegungsquelle zu halten und das gehaltene Objekt zu einem Bewegungsziel zu bewegen, umfassend:
eine Halteeinheit (200), die zum Halten des an der Bewegungsquelle positionierten Objekts (O) konfiguriert ist;
einen Bewegungsmechanismus (100), der so konfiguriert ist, dass er die Halteeinheit (200) an eine gewünschte Position bewegt;
eine Steuereinheit (300), umfassend:
eine Informationsanalyseeinheit (320);
eine Informationserfassungseinheit (310), die so konfiguriert ist, dass sie Informationen über das Objekt (O), das sich an einer Bewegungsquelle (S1) befindet, Informationen über die Bewegungsquelle (S1), Informationen über die Form des Bewegungsziels (S2) und Informationen über das Objekt (O), das zuvor an dem Bewegungsziel (S2) platziert wurde, erfasst und an die Informationsanalyseeinheit ausgibt; und
die Informationsanalyseeinheit (320) konfiguriert ist, um
eine Objektumrissinformation zu erzeugen, die einen Umriss des Objekts (O) anzeigt, das sich an der Bewegungsquelle (S1) befindet,
eine Bewegungsquellenforminformation, die eine Form der Bewegungsquelle (S1) anzeigt, die zu einem Hindernis wird, wenn das an der Bewegungsquelle (S1) positionierte Objekt (O) von der Halteeinheit (200) gehalten wird,
eine Bewegungszielforminformation, die die Form des Bewegungsziels (S2) anzeigt, das zu einem Hindernis wird, wenn das gehaltene Objekt (O) zu dem Bewegungsziel (S2) bewegt wird, und
eine Bewegungsziel-Ladeinformation, die das Objekt (O) anzeigt, das zuvor in dem Bewegungsziel (S2) platziert wurde, wobei die Steuereinheit **dadurch gekennzeichnet ist, dass** sie ferner umfasst:
eine Planungseinheit (330), die eine Halteplan-Erzeugungseinheit (330a) und eine BewegungsplanErzeugungseinheit (330b) umfasst, wobei die Halteplan-Erzeugungseinheit (330a) so konfiguriert ist, dass sie eine Halteposition und eine Haltestellung der Halteeinheit aus einer Vielzahl von Haltestellungen und Haltepositionen bestimmt, so dass der vorstehende Betrag eine spezifische Bedingung in Bezug auf das Objekt erfüllt, das sich an der Bewegungsquelle befindet, so dass die spezifische Bedingung ein Fall ist, dass ein vorstehender Betrag ein Minimalwert oder kleiner als ein vorbestimmter Wert unter der Vielzahl von Haltestellungen und Haltepositionen wird, die von der Halteplan-Erzeugungseinheit (330a) bestimmt werden,
so dass die Halteeinheit das Objekt (O), das sich an der Bewegungsquelle befindet, auf eine solche Weise hält, dass die Halteeinheit nicht mindestens eine Oberfläche oder mindestens zwei Oberflächen des Objekts (O) bedeckt, die mit einer Grenzoberfläche eines Lagerbereichs oder einer Seitenoberfläche eines anderen Objekts (O), das zuvor platziert wurde, übereinstimmen können, wobei das Bewegungsziel der Lagerbereich ist, und
wobei der vorstehende Betrag die Anzahl der Seiten ist, von denen die Halteeinheit (200) aus dem Umriss des an der Bewegungsquelle befindlichen Objekts herausragt, wenn man sie aus der Richtung betrachtet, in der sich das an der Bewegungsquelle befindliche Objekt und die Halteeinheit (200) überlappen,
wobei die Haltestellung eine Winkelposition der Halteeinheit (200) in Bezug auf das an der Bewegungsquelle befindliche Objekt (O) ist und
die Halteposition eine Position ist, an der das Objekt (O) in der Halteeinheit (200) gehalten wird, die sich ändert, wenn die Halteeinheit (200) parallel zu dem Objekt (O) bewegt wird, und
die Bewegungsplanerzeugungseinheit (330b) so konfiguriert ist, dass sie einen Bewegungsplan zum Bewegen des von der Halteeinheit (200) gehaltenen Objekts (O) zu dem Bewegungsziel (S2) erzeugt; und
eine Betriebssteuereinheit (340), die so konfiguriert ist, dass sie die Halteeinheit (200) und den Bewegungsmechanismus (100) basierend auf dem Halteplan und dem Bewegungsplan steuert, die von der Planungseinheit (330) geplant sind.

2. Handhabungsvorrichtung nach Anspruch 1, wobei die Halteplanerzeugungseinheit (330a) der Planungseinheit (330) so konfiguriert ist, dass sie mindestens eines der folgenden Elemente spezifiziert
eine Richtung, in der die Halteeinheit (200) nicht über die Kontur des an der Bewegungsquelle befindlichen Objekts O hinausragen soll, und
eine Seite des Objekts O, die sich an der Bewegungsquelle befindet, in die die Halteeinheit (200) nicht hineinragen soll,
basierend auf den Bewegungszielforminformationen und den Bewegungszielladeinformationen, die sich auf das Bewegungsziel (S2) des an der Bewegungsquelle befindlichen Objekts (O) beziehen, und
die Halteplan-Erzeugungseinheit (330a) ferner so konfiguriert ist, dass sie ein Gewicht auf den vorstehenden Betrag der Halteeinheit (200) in Bezug auf die spezifizierte Richtung oder die spezifizierte Seite des Objekts (O) erhöht.

3. Handhabungsvorrichtung nach Anspruch 1, wobei die Halteeinheit (200) so konfiguriert ist, dass sie das Objekt (O) in dem Speicherbereich (S2) freigibt.

4. Handhabungsvorrichtung nach Anspruch 3, wobei die Halteeinheit (200) so konfiguriert ist, dass sie das gehaltene Objekt (O) gegen die Begrenzungsflächen des Lagerbereichs oder die Seitenflächen des zuvor platzierten Objekts (O) drückt.

5. Handhabungsvorrichtung nach Anspruch 1, wobei die Halteeinheit (200) so konfiguriert ist, dass sie das gehaltene Objekt (O) gegen einen Eckabschnitt drückt, der durch zwei Oberflächen auf entweder einer der Grenzflächen des Lagerbereichs oder den Seitenflächen des zuvor platzierten Objekts (O) konfiguriert ist.

6. Handhabungsvorrichtung nach Anspruch 1 oder Anspruch 3, wobei die Steuereinheit (300) so konfiguriert ist, dass sie die Halteeinheit (200) so steuert, dass sie das an der Bewegungsquelle befindliche Objekt (O) so hält, dass die Anzahl der Seiten des gehaltenen Objekts (O), von denen die Halteeinheit (200) aus dem Umriss des Objekts (O) herausragt, im Hinblick auf die Richtung, in der das Objekt (O) und die Halteeinheit (200) einander überlappen, minimiert wird.

7. Handhabungsvorrichtung nach Anspruch 1 oder Anspruch 2,
wobei die Halteeinheit (200) durch eine Mehrzahl von Adsorptionseinheiten (205) konfiguriert ist, und
eine Darstellungseinheit, die so konfiguriert ist, dass sie Informationen ausgibt, die einen Austauschzeitpunkt für jede der Adsorptionseinheiten (205) in Übereinstimmung mit einem Nutzungsgrad jeder der Adsorptionseinheiten (205) angeben, enthalten ist.

8. Handhabungsvorrichtung nach Anspruch 1 oder Anspruch 3,
wobei die Halteeinheit (200) durch eine Mehrzahl von Adsorptionseinheiten konfiguriert ist, und
die Steuereinheit (300), die so konfiguriert ist, dass sie eine Einsatzhäufigkeit jeder der Adsorptionseinheiten (205) in Übereinstimmung mit einem Einsatzgrad jeder der Adsorptionseinheiten ändert, enthalten ist.

## Revendications

1. Dispositif de manipulation (10) configuré pour maintenir un objet positionné au niveau d'une source de mouvement et pour déplacer l'objet maintenu vers une destination de mouvement, comprenant :
une unité de maintien (200) configurée pour maintenir l'objet (O) positionné au niveau de la source de mouvement ;
un mécanisme de déplacement (100) configuré pour déplacer l'unité de maintien (200) dans une position souhaitée ;
une unité de commande (300) comprenant :
une unité d'analyse d'informations (320) ;
une unité d'acquisition d'informations (310) configurée pour acquérir et délivrer en sortie à l'unité d'analyse d'informations des informations sur l'objet (O) situé au niveau d'une source de mouvement (S1), des informations sur la source de mouvement (S1), des informations sur la forme de la destination de mouvement (S2), et des informations sur l'objet (O) précédemment placé dans la destination de mouvement (S2) ; et
l'unité d'analyse d'informations (320) est configurée pour
générer une information de contour d'objet indiquant un contour de l'objet (O) situé au niveau de la source de mouvement (S1),
une information de forme de source de mouvement indiquant une forme de la source de mouvement (S1) qui devient un obstacle lorsque l'objet (O) positionné au niveau de la source de mouvement (S1) est maintenu par l'unité de maintien (200),
une information de forme de destination de mouvement indiquant la forme de la destination de mouvement (S2) qui devient un obstacle lorsque l'objet maintenu (O) est déplacé vers la destination de mouvement (S2), et
une information de chargement de destination de mouvement indiquant l'objet (O) précédemment placé dans la destination de mouvement (S2),
l'unité de commande étant **caractérisée en ce qu'**elle comprend en outre :
une unité de planification (330) comprenant une unité de génération de plan de maintien (330a) et une unité de génération de plan de mouvement (330a), l'unité de génération de plan de maintien (330a) étant configurée pour déterminer une position de maintien et une posture de maintien de l'unité de maintien parmi une pluralité de postures de maintien et positions de maintien, de sorte que la quantité en saillie satisfasse à une condition spécifique par rapport à l'objet situé au niveau de la source de mouvement de sorte que la condition spécifique soit un cas selon lequel une quantité en saillie devient une valeur minimum ou inférieure à une valeur prédéterminée parmi la pluralité de postures de maintien et de positions de maintien déterminées par l'unité de génération de plan de maintien (330a),
de sorte que l'unité de maintien maintienne l'objet (O) situé au niveau de la source de mouvement de telle manière que l'unité de maintien ne couvre pas au moins une surface ou au moins deux surfaces de l'objet (O) qui peuvent se conformer à une surface limite d'une zone de stockage ou une surface latérale d'un autre objet (O) précédemment placé, dans lequel la destination de mouvement est la zone de stockage, et
la quantité en saillie étant le nombre de côtés à partir desquels l'unité de maintien (200) fait saillie du contour de l'objet situé au niveau de la source de mouvement vu depuis la direction dans laquelle l'objet situé au niveau de la source de mouvement et l'unité de maintien (200) se chevauchent,
dans lequel la posture de maintien est une position angulaire de l'unité de maintien (200) par rapport à l'objet (O) situé au niveau de la source de mouvement et
la position de maintien est une position, dans laquelle l'objet (O) est maintenu dans l'unité de maintien (200) qui change lorsque l'unité de maintien (200) est déplacée parallèlement à l'objet (O), et
l'unité de génération de plan de mouvement (330b) est configurée pour générer un plan de mouvement pour le déplacement de l'objet (O) maintenu par l'unité de maintien (200) vers la destination de mouvement (S2) ; et
une unité de commande d'opération (340) configurée pour commander l'unité de maintien (200) et le mécanisme de déplacement (100) sur la base du plan de maintien et du plan de mouvement planifié par l'unité de planification (330).

2. Dispositif de manipulation selon la revendication 1, dans lequel l'unité de génération de plan de maintien (330a) de l'unité de planification (330) est configurée pour spécifier au moins une d'une direction dans laquelle l'unité de maintien (200) ne devrait pas faire saillie du contour de l'objet (O) situé au niveau de la source de mouvement et un côté de l'objet (O) situé au niveau de la source de mouvement dans laquelle l'unité de maintien (200) ne devrait pas faire saillie,
sur la base des informations de forme de destination de mouvement et des informations de chargement de destination de mouvement relatives à la destination de mouvement (S2) de l'objet (O) situé au niveau de la source de mouvement, et
l'unité de génération de plan de maintien (330a) est en outre configurée pour augmenter un poids à la quantité en saillie de l'unité de maintien (200) par rapport à la direction spécifiée ou au côté spécifié de l'objet (O).

3. Dispositif de manipulation selon la revendication 1, dans lequel l'unité de maintien (200) est configurée pour libérer l'objet (O) dans la zone de stockage (S2).

4. Dispositif de manipulation selon la revendication 3, dans lequel l'unité de maintien (200) est configurée pour presser l'objet maintenu (O) contre les surfaces limites de la zone de stockage ou les surfaces latérales de l'objet (O) précédemment placé.

5. Dispositif de manipulation selon la revendication 1, dans lequel l'unité de maintien (200) est configurée pour presser l'objet maintenu (O) contre une portion de coin configurée par deux surfaces sur une des surfaces limites de la zone de stockage ou des surfaces latérales de l'objet (O) précédemment placé.

6. Dispositif de manipulation selon la revendication 1 ou la revendication 3, dans lequel l'unité de commande (300) est configurée pour commander l'unité de maintien (200) pour maintenir l'objet (O) situé au niveau de la source de mouvement de telle manière que le nombre de côtés de l'objet maintenu (O), à partir duquel l'unité de maintien (200) fait saillie du contour de l'objet (O), soit minimisé compte tenu de la direction où l'objet (O) et l'unité de maintien (200) se chevauchent.

7. Dispositif de manipulation selon la revendication 1 ou la revendication 2,
dans lequel l'unité de maintien (200) est configurée par une pluralité d'unités d'adsorption (205), et
une unité de présentation qui est configurée pour délivrer en sortie des informations indiquant un temps de remplacement de chacune des unités d'adsorption (205) selon un degré d'utilisation de chacune des unités d'adsorption (205) est incluse.

8. Dispositif de manipulation selon la revendication 1 ou la revendication 3,
dans lequel l'unité de maintien (200) est configurée par une pluralité d'unités d'adsorption, et l'unité de commande (300) qui est configurée pour changer une fréquence d'utilisation de chacune des unités d'adsorption (205) selon un degré d'utilisation de chacune des unités d'adsorption est incluse.
